# EUROPÄISCHE PATENTSCHRIFT

(11) **EP 1 116 651 B1**
(45) Veröffentlichungstag und Bekanntmachung des Hinweises auf die Patenterteilung: **30.06.2004**
(21) Anmeldenummer: 01100656.6
(22) Anmeldetag: 11.01.2001
(51) Int. Cl.: B64D 11/00

(54) **Gepäckablage mit einem absenkbaren Gepäckfach, insbesondere für eine Flugzeugpassagierkabine**
Aircraft stowage bin with pull-down housing
Coffre de rangement avec boîtier abaissable pour aéronef

(30) Priorität: 13.01.2000 DE 10001038
(43) Veröffentlichungstag der Anmeldung: 18.07.2001
(73) Patentinhaber: Airbus Deutschland GmbH, 21129 Hamburg (DE)
(72) Erfinder: Sprenger, Wilfried, 21698 Issendorf (DE); Rössner, Bernd, 21224 Rosengarten (DE)
(74) Vertreter: Hansmann, Dierk, Dipl.-Ing.

(56) Entgegenhaltungen:
- US-A- 5 441 218
- US-A- 5 456 529

## Beschreibung

Die Erfindung betrifft eine Gepäckablage mit einem absenkbaren Gepäckfach, insbesondere für eine Flugzeugpassagierkabine, wobei das Gepäckfach über mindestens ein Führungsystem von einer oberen geschlossenen Position in eine untere offene Beladeposition absenkbar ist und eine Antriebseinrichtung vorgesehen ist.

Derartige Gepäckablagen, die insbesondere in Passagierkabinen eines Verkehrsflugzeuges Anwendung finden, sind mit einer Vielzahl von Ausgestaltungen des Führungssystems zum Absenken des Gepäckfachs aus dem Stand der Technik bekannt. Beispielsweise ist zur Führung der Bewegung des Gepäckfaches ein aus DE-OS 195 46 302 bekanntes Viergelenksystem nutzbar oder ein Linearführungssystem, wie aus DE-OS 198 00 588 bekannt. Diese Führungssysteme können mit Antriebseinrichtungen ausgestattet sein, um insbesondere für das Hochschwenken des beladenen Gepäckfaches eine Unterstützungskraft für die Handbetätigung zur Verfügung zu stellen. Die Antriebseinrichtung kann neben üblichen Lösungen zur Unterstützung mittels Zugfedern oder Gasfedern auch als motorischer Antrieb ausgebildet sein, der ohne weitere manuelle Betätigungskraft das Auf- und Abwärtsbewegen des Gepäckfaches bewirkt wie aus US 5 456 529 bekannt. Die Nutzung eines Hubantriebes ist für die Passagiere und Flugbegleiter sehr komfortabel, da keine Betätigungskräfte eingesetzt werden müssen. Problematisch ist es jedoch, wenn der Hubantrieb ausfällt. Aus Gründen der Sicherheit ist es notwendig, daß das Gepäckfach zu jedem Zeitpunkt des Fluges verschließbar ist, d.h. auch bei Ausfall des Hubantriebs in die obere geschlossene Position bewegt und in dieser Position sicher gehalten werden kann. Andererseits fordern die Passagiere eine ständige Erreichbarkeit ihres Handgepäcks, was auch die Zugänglichkeit zum Gepäckfach bei einem möglichen Ausfall des Hubantriebs erfordert.

Der Erfindung liegt daher die Aufgabe zugrunde, für eine gattungsgemäße Gepäckablage ein jederzeit zugängliches und wieder verschließbares Gepäckfach zu ermöglichen, wobei bei einem Ausfall der motorischen Antriebseinrichtung das Gepäckfach noch manuell geöffnet und sicher geschlossen werden kann.

Die oben definierte Aufgabenstellung wird bei einer gattungsgemäßen Gepäckablage durch die im Patentanspruch 1 genannten Maßnahmen gelöst.

Dabei ist insbesondere vorteilhaft, daß Gepäckablagen mit motorbetriebenen Antriebseinrichtungen mit einer Notfunktion ausgestattet sind, um jederzeit ein Öffnen und sicheres Schließen des Gepäckfachs zu ermöglichen und eine Zugänglichkeit zum Handgepäck auch bei Ausfall der Antriebs ohne weiteres möglich ist.

Weiterbildungen und vorteilhafte Ausgestaltungen sind in den Unteransprüchen 2 bis 10 angegeben.

Mit der Ausbildung der Gepäckablage gemäß der Ansprüche 2, 3 bzw. 4 kann das Gepäckfach in der oberen Position unabhängig von der Funktionsbereitschaft der Antriebseinrichtung sicher fixiert werden. Damit sind in einfacher Weise sicherheitsrelevante Bedingungen erfüllt, die insbesondere im Verkehrsflugzeug bedeutsam sind.

Die Maßnahmen gemäß der Ansprüche 5 oder 6 zeigen alternative Antriebsarten zum Bewegen des Gepäckfachs, wobei eine mechanische Kupplungseinrichtung bedarfsweise und ohne großen Aufwand das Abkoppeln des Antriebsmotors und damit die Möglichkeit zum manuellen Bedienen des Gepäckfachs realisiert.

Alternative Möglichkeiten zum Betätigen der zur Kupplungseinrichtung gehörenden Schaltklaue sind in den Ansprüchen 7 und 8 angegeben.

Die in den Ansprüchen 9 und 10 ausgeführten Weiterbildungen zeigen alternative Antriebseinrichtungen, die unaufwendig mittels einer Kupplungseinrichtung vom Bewegungsabiauf des absenkbaren Gepäckfachs abkoppelbar sind.

In der Zeichnung sind Ausführungsbeispiele der Erfindung dargestellt, die nachstehend anhand der Figuren 1 bis 7 näher beschrieben sind. In den Figuren sind gleiche Bauteile mit gleichen Bezugszeichen versehen.

Es zeigen:
- Fig. 1: eine Darstellung einer ersten Ausführungsform einer erfindungsgemäßen Antriebseinrichtung für ein absenkbares Gepäckfach,
- Fig. 2: eine Schnittdarstellung gemäß Fig. 1, Schnitt A-A der ersten Ausführungsform der Antriebseinrichtung,
- Fig. 3: eine Einzelheitdarstellung der Verriegelungseinrichtung für das absenkbare Gepäckfach,
- Fig. 4: eine Darstellung einer zweiten Ausführungsform der erfindungsgemäßen Antriebseinrichtung für ein absenkbares Gepäckfach,
- Fig. 5: eine Schnittdarstellung gemäß Fig. 4, Schnitt B-B der zweiten Ausführungsform der Antriebseinrichtung,
- Fig. 6: eine schematische Darstellung einer dritten Ausführungsform der Antriebseinrichtung für ein absenkbares Gepäckfach und
- Fig. 7: eine schematische Darstellung einer vierten Ausführungsform der Antriebseinrichtung für ein absenkbares Gepäckfach.

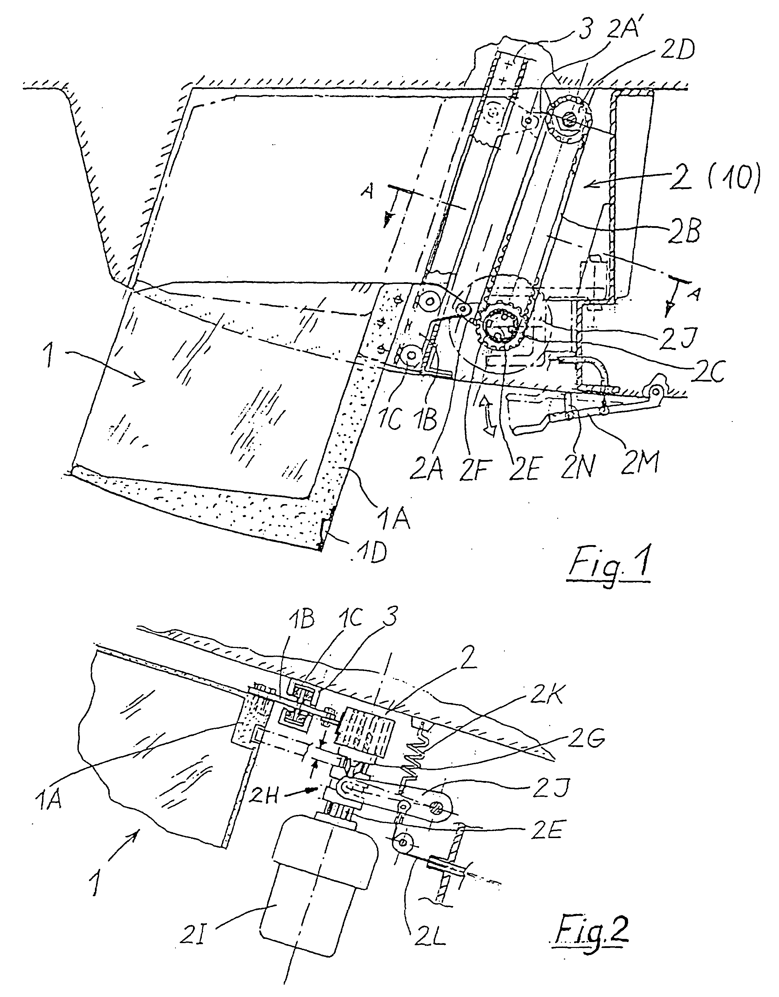

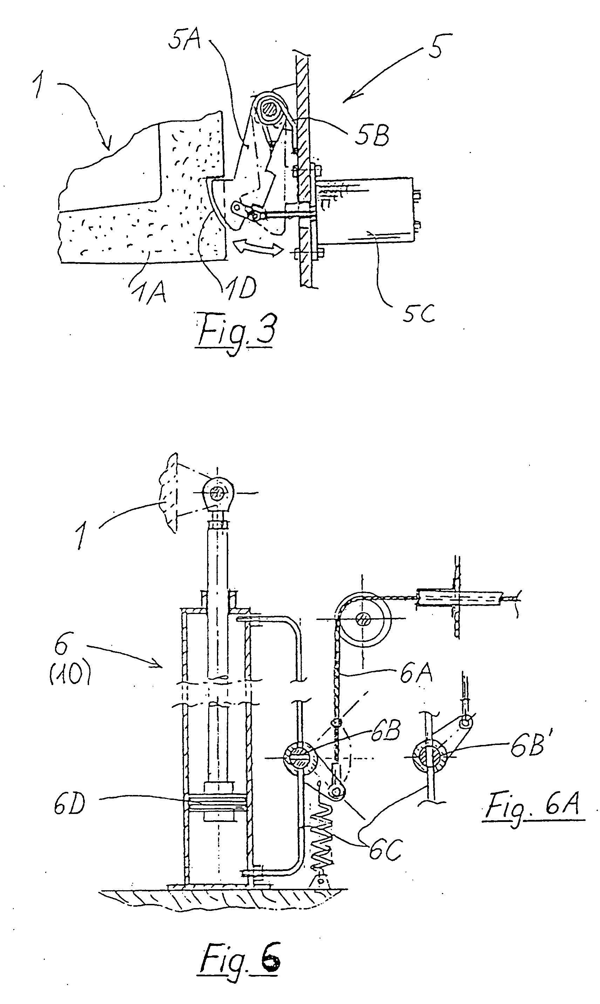

Die Figuren 1 und 2 zeigen eine erste Ausführungsform der Erfindung, bei der ein Gepäckfach 1 mittels eines Zahnriementriebs 2 linear in Führungsschienen 3 verfahren wird. Der Zahnriementrieb 2 ist eine mögliche Ausführung einer Antriebseinrichtung 10, die das Absenken (Öffnen) des Gepäckfachs 1 von einer oberen Position in eine untere Position sowie das Hochfahren (Schließen) des Gepäckfachs 1 wieder in die obere Position bewirkt. Die Betätigung der Antriebseinrichtung 10 zum Öffnungs- bzw. Schließvorgang erfolgt vorzugsweise mittels Bedienschalter (nicht gezeigt). Das Gepäckfach 1 besitzt seitlich Tragarme 1A, auf welche Laschen 1B mit Laufrollen 1C befestigt sind. Der rückwärtige Fortsatz der Lasche ist mit einem Mitnehmer 2A des Zahnriementriebs 2 verbunden. Die geschlossene obere Position des Gepäckfachs 1 ist strichpunktiert dargestellt. Dabei nimmt der Mitnehmer 2A die Position 2A' ein. Der Zahnriementrieb 2 besteht im wesentlichen aus einem Zahnriemen 2B mit Antriebszahnrad 2C und Laufzahnrad 2D. Das Antriebszahnrad 2C ist auf der Nutwelle 2E frei drehbar und beispielsweise auf einem Gleitlager 2F gelagert. Außerdem besitzt das Antriebszahnrad 2C einen (oder mehrere) Mitnehmer-Zahn (-Zähne) 2G in welche die auf der Nutwelle 2E verschiebbare Kupplung 2H eingreift. Dabei können Zahn und Nut natürlich auch vertauscht sein.
Die Kupplung 2H überträgt in der geschlossenen Stellung (gezeigt ist in Fig. 2 die ausgekuppelte Stellung) die Drehbewegung des Antriebmotors 2I auf den Zahnriemen 28. In der geschlossenen Stellung der Kupplung 2H ist somit das Absenken des Gepäckfaches 1 durch Auslösen der Hubantriebs (Zahnriementrieb 2) mittels Betätigungsschalter möglich. Durch den Einschaltimpuls löst sich auch eine Verriegelung 5 (siehe Fig. 3), welche das Gepäckfach 1 in der oberen Position unabhängig vom Antrieb sicher fixiert, und der Zahnriementrieb 2 befördert das Gepäckfach 1 in die untere Position. Wenn das Gepäckfach 1 beim Herunterfahren die Endposition erreicht hat, wird der Zahnriementrieb 2 vorzugsweise mittels eines Endschalters ausgeschaltet. Zum Hochfahren des Gepäckfaches 1 aus der unteren Position wird ebenfalls ein Betätigungsschalter betätigt und der Hubantrieb 10 wird in Hochfahrbewegungsrichtung in Gang gesetzt. In oberer Endposition kann ebenfalls mittels eines Endschalters der Hubantrieb 10 ausgeschaltet werden. Zur Fixierung der geschlossenen (oberen) Stellung des Gepäckfachs 1 dient die in Fig. 3 näher beschriebene Verriegelung 5. Dazu ist im Tragarm 1A eine Arretiertasche 1 D vorgesehen. Falls der Zahnriementrieb 2 ausfällt, gibt es die Möglichkeit, mittels der Kupplung 2H den nicht funktionsfähigen Antrieb von der Kraftübertragung abzutrennen (auszukuppeln) und als Notfunktion das Öffnen und Schließen des Gepäckfachs 1 mittels Handkraft zu realisieren. Der Zustand des abgekoppelten Antriebes 2 ist in Fig. 2 gezeigt. Zur Kupplungsschaltung ist eine Schaltklaue 2J vorgesehen, welche durch die Feder 2K ständig in der geschlossenen Kupplungsstellung gehalten wird. Die Pfeile sollen den Kupplungshub verdeutlichen. Zum Auskuppeln dient z.B. ein Kabelzug 2L oder eine ähnliche, beispielsweise elektrische Einrichtung. Der Kabelzug 2L ist mit einem Handhebel 2M verbunden, welcher zum manuellen Auskuppeln des Antriebsmotors 2I dient. Eine kleine bewegliche Klinke 2N sorgt dafür, daß die Kupplung 2H die ausgerückte Stellung beibehält. Mittels der beschriebenen Komponenten ist es nun möglich, bei Ausfall des Hubantriebs das Gepäckfach 1 manuell zu bedienen. Befindet sich das Gepäckfach 1 in der oberen Position wird über den Handhebel 2M und den Kabelzug 2L der Zahnriementrieb 2 abgekoppelt. Gleichzeitig wird der Bedienschalter gedrückt, um ein Hubmagnet 5C (siehe Fig. 3) zu aktivieren und damit die Verriegelungsklinke 5A aus der Arretiertasche 1D auszuklinken. Das Gepäckfach 1 kann nun mittels Handkraft nach unten bewegt werden. Wenn das Gepäckfach 1 durch Gepäck belastet ist, wird es durch die Gewichtskraft sogar selbständig nach unten bewegt. Zur Abdämpfung der Abwärtsbewegung kann es vorteilhaft sein, ein Dämpfeinrichtung wie beispielsweise eine Gasfeder einzusetzen.
Fällt der Zahnriementrieb 2 aus, wenn sich das Gepäckfach 1 in der unteren Position befindet, kann die Bedienperson über den Handhebel 2M den Antrieb abkuppeln und das Gepäckfach 1 kann mittels Handkraft nach oben gedrückt werden. In der oberen Position rastet selbsttätig die Verriegelungsklinke 5A in die Arretiertasche 1D und das Gepäckfach 1 ist in der oberen Position fixiert. Somit ist mittels der erfindungsgemäßen Antriebseinrichtung 10 mit Auskopplungsmöglichkeit 2H gewährleistet, daß auch bei Ausfall des krafterzeugenden Antriebs eine volle Benutzbarkeit des Gepäckfaches 1 erhalten bleibt und manuell das Öffnen und Schließen des Gepäckfachs 1 realisiert werden kann.

In Fig. 3 ist die Verriegelungseinrichtung 5 als Einzelheit dargestellt, die zum sicheren Festhalten des Gepäckfachs 1 in der oberen Position innerhalb der Gepäckablage dient. Die Verriegelung 5 besteht aus einer Klinke 5A, welche beispielsweise mittels einer (Torsions-) Feder 5B im Eingriff mit der Arretiertasche 1D des Tragarms 1A steht. Wenn das Gepäckfach 1 nach unten bewegt werden soll (öffnen), wird die Klinke 5A mittels des Hubmagnets 5C oder durch eine vergleichbare Einrichtung außer Eingriff mit der Arretiertasche 1D gebracht und das Gepäckfach 1 kommt frei. Ein Ausklinken der Klinke 5A kann auch mechanisch, beispielsweise mittels Kabelzüge realisiert werden.

Wenn das Gepäckfach 1 anschließend wieder in die Ausgangslage nach oben geschoben wird, verriegelt die Klinke 5A infolge Federkraft.

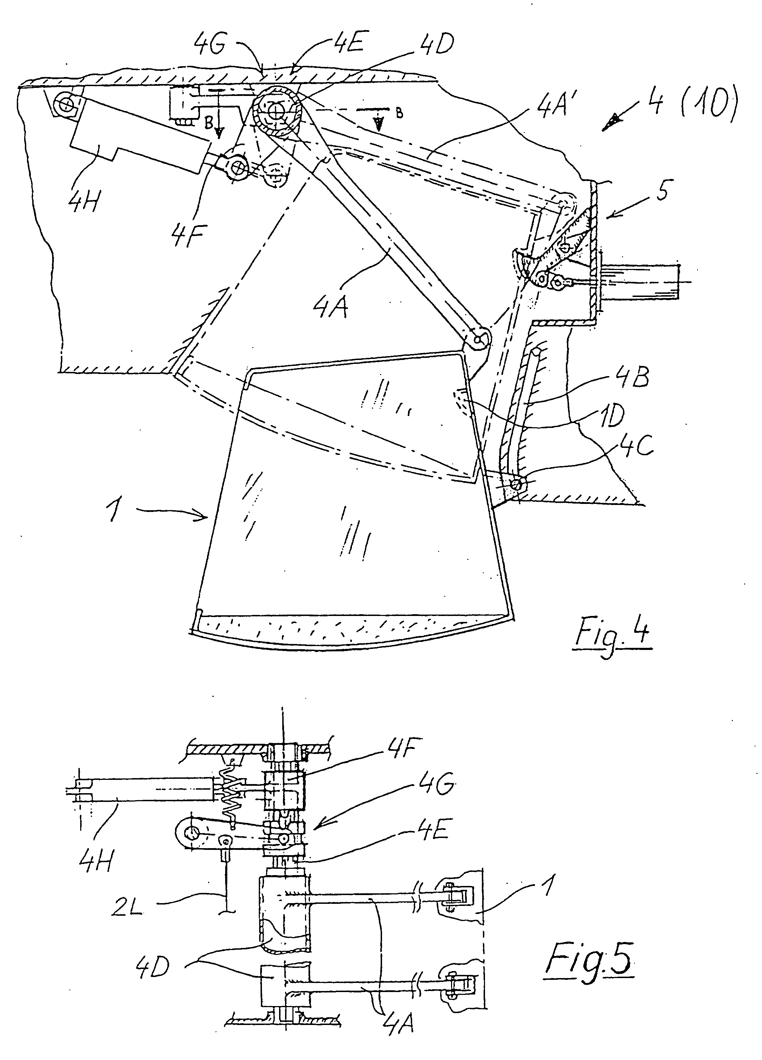

In den Fign. 4 und 5 ist eine zweite Ausführungsform einer Antriebs- und Führungseinrichtung 10 zum Absenken bzw. Hochschwenken des Gepäckfachs gezeigt. Zum Linearantrieb (Zahnriementrieb 2) stellt diese als Schwenkantrieb 4 ausgebildete Antriebseinrichtung 10 eine alternative Lösung dar. Beim Schwenkantrieb 4 wird das Gepäckfach 1 mittels einem (oder mehreren) Hebelarm(en) 4A bewegt. Zur gewünschten Positionierung oben im Deckenbereich der Fluggastkabine dient ein Kulisse 48 in der eine am Gepäckfach 1 angelenkte Laufrolle 4C sich abstützt. Die geschlossene (obere) Position des Gepäckfachs 1 ist strichpunktiert dargestellt. Die Hebelarme 4A sind in der oberen Position mit 4A' bezeichnet. Sie sind durch eine Torsionsrolle 4D miteinander verbunden und werden über eine Nutwelle 4E und einem darauf drehbar und fixierbar gelagerten Hebel 4F bewegt. Der eigentliche Antrieb zum Absenken bzw. Hochschwenken des Gepäckfachs 1 wird durch einen Arbeitszylinder 4H (z.B. Elektrospindel) gewährleistet, der am Hebel 4F angreift. Die Fixierung des Hebels 4F erfolgt über eine Kupplung 4G, die im Normalfall permanent eingekuppelt ist und somit den Schwenkantrieb 4 über den Hebel 4F mit den Hebelarmen 4A verbindet. Bei Ausfall des Schwenkantriebs 4 kann über die Kupplung 4G der Schwenkantrieb 4 abgekoppelt werden und eine manuelle Betätigung des Gepäckfachs 1 ist möglich. Die prinzipielle Wirkungsweise der Kupplung 4G und der damit möglichen manuellen Betätigung des Gepäckfachs 1 entspricht der bereits in den vorangegangenen Figuren gezeigten und näher beschriebenen Kupplung 2H. Auch die Verriegelung 5 des Gepäckfachs 1 in hochgeschwenkter Position ist wirkungsgleich mit der in Fig. 3 näher gezeigten und beschriebenen Ausführung.

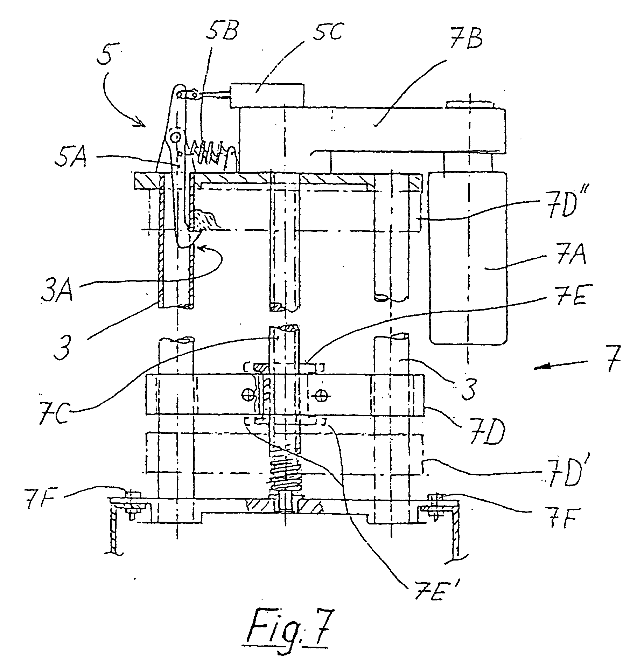

In Fig. 6 ist in schematischer Darstellung eine dritte Ausführungsform einer Antriebseinrichtung 10 gezeigt. Die Antriebseinrichtung 10 ist mittels eines hydraulischen oder pneumatischen Arbeitszylinders 6 realisiert. Im Arbeitszylinder 6 wird ein Arbeitskolben 6D hydraulisch oder pneumatisch bewegt und damit das Gepäckfach 1 nach oben oder unten bewegt. Durch ein mittels Kabelzug 6A bedienbares Ventil 6B kann der Arbeitskolben 6D außer Funktion gebracht bzw. überbrückt werden kann. Dies ist dann erforderlich, wenn der hydraulische oder pneumatische Hubantrieb des Gepäckfachs 1 ausfällt und dieses manuell bedient werden muß. In der Fig. 6A ist die Schaltstellung des Ventils 6B' bei geöffneter Bypassleitung 6C gezeigt, wobei Vorder- und Rückseite des Arbeitskolbens 6D innerhalb des Hubraumes vom Arbeitszylinder 6 miteinander verbunden sind und so eine Überbrückung des Servoantriebs des Gepäckfachs 1 und die Bedienung per Hand ermöglicht wird. Je nach Arbeitsmedium sind dabei die Rohrquerschnitte der Bypassleitung 6C größer oder kleiner zu dimensionieren.
Die Wirkungsweise zum Bedienen des Ventils 6B, um ein Abkoppeln des Antriebs vom Arbeitskolben 6D zu erreichen, entspricht im wesentlichen der bereits ausführlich beschriebenen Kupplung 2H bzw. 4G. Das Ventil 68 wird mittels einer Federkraft in geschlossener Stellung gehalten und die Bypassleitung 6C ist damit geschlossen. Wenn der Hubantrieb 6 ausfällt, kann über eine Betätigung des Kabelzugs 6A das Ventil 6B geöffnet und durch einen Fluidfluß durch die Bypassleitung 6C kann manuell der Arbeitskolben 6D bewegt werden. Die Verriegelung 5 des Gepäckfachs 1 in oberer Position ist in dieser Figur nicht dargestellt, kann aber in gleicher Wirkungsweise wir zuvor beschrieben erfolgen.

Fig. 7 zeigt einen Spindelhubantrieb 7 als eine vierte Ausführungsform der Antriebseinrichtung 10 für ein absenkbares Gepäckfach. Der Spindelhubantrieb 7 besteht in seinen wesentlichen Bestandteilen aus Antriebsmotor 7A, Getriebe 7B, Schraubspindel 7C, Führungsrohre 3, Schlitten 7D, Mutter 7E sowie einer Verriegelung 5. Das Gepäckfach 1 (nicht gezeichnet) ist mit dem Schlitten 7D verschraubt, vorzugsweise mittels Verschraubungen 7F. Zum Abkoppeln des Antriebs ist vorgesehen, die in zwei Hälften geteilte Mutter 7E außer Eingriff mit der Schraubspindel 7C und in die Position 7E' zu bringen. So kann das Gepäckfach 1 und damit der Schlitten 7D in die untere Position 7D' und obere Position 7D" verfahren werden (strichpunktiert dargestellt), ohne mit der Schraubspindel 7C in Wirkverbindung zu stehen. Es ist ersichtlich, daß die Klinke 5A durch einen Schlitz 3A im Führungsrohr 3 nach außen dringt und dort den Schlitten 7D" verriegelt. Die Funktionsweise der Verriegelung 5 erfolgt wie bereits in Fig. 3 dargestellt und beschrieben, d.h. ein Ausklinken erfolgt über ein Hubmagnet 5C, welches durch Betätigung des Bedienschalters geschaltet wird. Alternativ dazu kann eine Entriegelung der Klinke 5A auch mechanisch über einen Kabelzug erfolgen

Die zuvor beschriebenen Ausführungsformen der Antriebseinrichtung geben nur beispielhaft anwendbare mögliche Antriebe zum Absenken und Hochschwenken von Gepäckfächern in Gepäckablagen an. Verschiedene Antriebssysteme, die nach dem bekannten Stand der Technik für absenkbare Gepäckfächer einsetzbar sind, können mit erfindungsgemäßen Kupplungseinrichtungen ausgestattet werden, um als Notfunktion ein Abkoppeln des Antriebes und eine manuelle Betätigung der absenkbaren Gepäckfächer zu erreichen.

### Bezugszeichenliste

- 1: Gepäckfach
- 1A: Tragarm
- 1B: Lasche
- 1C: Laufrolle
- 1D: Arretiertasche

- 10: Antriebseinrichtung

- 2: Zahnriemenantrieb
- 2A: Mitnehmer
- 2A': Mitnehmer in oberer Position
- 2B: Zahnriemen
- 2C: Antriebszahnrad
- 2D: Laufzahnrad
- 2E: Nutwelle
- 2F: Gleitlager
- 2G: Mitnehmerzahn
- 2H: Kupplung
- 2I: Antriebsmotor
- 2J: Schaltklaue
- 2K: Feder
- 2L: Kabelzug
- 2M: Handhebel
- 2N: Klinke

- 3: Führungsschienen bzw. Führungsrohre
- 3A: Schlitz

- 4: Schwenkantrieb
- 4A: Hebelarm
- 4A': Hebelarm in oberer Position
- 4B: Kulisse
- 4C: Laufrolle
- 4D: Torsionsrohr
- 4E: Nutwelle
- 4F: Hebel
- 4G: Kupplung
- 4H: Arbeitszylinder

- 5: Verriegelung
- 5A: Klinke
- 5B: Feder
- 5C: Hubmagnet

- 6: Arbeitszylinder
- 6A: Kabelzug
- 6B: Ventil
- 6B': Ventil geöffnet
- 6C: Bypassleitung
- 6D: Arbeitskolben

- 7: Spindelhubantrieb
- 7A: Antriebsmotor
- 7B: Getriebe
- 7C: Schraubspindel
- 7D: Schlitten
- 7D': Schlitten in unterer Position
- 7D": Schlitten in oberer Position
- 7E: Mutter (geteilt)
- 7E': Geteilte Mutter - geöffnet
- 7F: Verschraubung Schlitten - Gepäckfach

## Patentansprüche

1. Gepäckablage mit einem absenkbaren Gepäckfach (1), wobei das Gepäckfach (1) über mindestens ein Führungsystem (3; 4A, 4B, 4C) von einer oberen geschlossenen Position in eine untere offene Beladeposition absenkbar ist und eine Antriebseinrichtung (10) vorgesehen ist, **dadurch gekennzeichnet, daß** eine Kupplungseinrichtung (2H; 4G; 68, 6C; 7E) zum Abkoppeln der Antriebseinrichtung (10) vom Führungssystem (3; 4A, 48, 4C) vorgesehen ist.

2. Gepäckablage nach Anspruch 1,
**dadurch gekennzeichnet, daß**
eine Verriegelungseinrichtung (5) zum Sichern des Gepäckfaches (1) in der geschlossenen oberen Position vorgesehen ist.

3. Gepäckablage nach Anspruch 2,
**dadurch gekennzeichnet, daß**
die Verriegelungseinrichtung (5) aus einer Einrastklinke (5A) besteht, die in eine am Gepäckfach (1) vorgesehene Arretierung (1D) nach Erreichen der oberen geschlossenen Position einrastet und mittels einem Betätigungsmittel (5C) bedarfsweise ausrastbar ist.

4. Gepäckablage nach Anspruch 3,
**dadurch gekennzeichnet, daß**
die Einrastklinke (5A) federbelastet ausgeführt ist und infolge der Federkraft in die Arretierung (1D) einrastet und zum Ausrasten der Klinke (5A) das Betätigungsmittel als ein Hubmagnet (5C) oder als ein manuell betätigbarer Kabelzug ausgebildet ist.

5. Gepäckablage nach einem der Ansprüche 1 bis 4,
**dadurch gekennzeichnet, daß**
die Antriebseinrichtung (10) als ein Zahnriemenantrieb (2) ausgebildet ist, wobei auf einer Antriebswelle (2E) eine mechanische Kupplung (2H) vorgesehen ist, die den Antriebsmotor (21) bedarfsweise abkoppelt.

6. Gepäckablage nach einem der Ansprüche 1 bis 4,
**dadurch gekennzeichnet, daß**
die Antriebseinrichtung (10) als ein Schwenkantrieb (4) ausgebildet ist, wobei auf einer um die Schwenkachse angeordnete Nutwelle (4E) eine mechanische Kupplung (4G) vorgesehen ist, die mittels einer Schaltklaue (2J) schaltbar ist und den Antrieb (4H) bedarfsweise abkoppelt.

7. Gepäckablage nach Anspruch 5 oder 6,
**dadurch gekennzeichnet, daß**
die mechanische Kupplung (2H, 4G) mittels einer Schaltklaue (2J) schaltbar ist und die Schaltklaue (2J) manuell über einen Kabelzug (2L) und einen Handhebel (2M) schaltbar ist.

8. Gepäckablage nach Anspruch 5 oder 6,
**dadurch gekennzeichnet, daß**
die mechanische Kupplung (2H, 4G) mittels einer Schaltklaue (2J) schaltbar ist und die Schaltklaue (2J) elektrisch, elektromagnetisch, pneumatisch oder hydraulisch schaltbar ist.

9. Gepäckablage nach einem der Ansprüche 1 bis 4,
**dadurch gekennzeichnet, daß**
die Antriebseinrichtung (10) als ein Fluidhubantrieb (6) mittels hydraulischem oder pneumatischem Arbeitszylinder (6) ausgebildet ist, wobei ein Arbeitskolben (6D) den Hubweg ausführt und die Kupplungseinrichtung durch eine Bypassleitung (6C) und einem Ventil (68) gebildet ist, wobei zum Abkoppeln des Servoantriebs die Bypassleitung (6C) geöffnet wird.

10. Gepäckablage nach einem der Ansprüche 1 bis 4,
**dadurch gekennzeichnet, daß**
die Antriebseinrichtung (10) als ein Spindelhubantrieb (7) bestehend aus Schraubspindel (7C), Getriebe (7B) und Antriebsmotor (7A) ausgebildet ist, wobei ein mit dem Gepäckfach (1) verbundener Schlitten (7D) mittels der Schraubspindel (7C) den Spindelhub ausführt und eine Einrichtung zum Trennen (7E) von Schraubspindel (7C) und Schlitten (7D) vorgesehen ist.

## Claims

1. Luggage repository having a lowerable luggage bin (1), wherein the luggage bin (1) can be lowered, via at least one guide system (3; 4A, 4B, 4C), from an upper, closed position into a lower, open loading position, and a driving arrangement (10) is provided,
**characterised in that**
a coupling arrangement (2H; 4G; 6B, 6C; 7E) is provided for uncoupling the driving arrangement (10) from the guide system (3; 4A. 4B, 4C).

2. Luggage repository according to claim 1,
**characterised in that**
an interlocking arrangement (5) is provided for securing the luggage bin (1) in the closed, upper position.

3. Luggage repository according to claim 2,
**characterised in that**
the interlocking arrangement (5) consists of a first latching-in pawl (5A) which latches into a detent (1D) provided on the luggage bin (1) after the upper, closed position has been reached, and can be unlatched by means of an actuating means (5C) as necessary.

4. Luggage repository according to claim 3,
**characterised in that**
the latching-in pawl (5A) is of spring-loaded design and latches into the detent (1D) as a result of the force of the spring and, for the purpose of unlatching the pawl (5A), the actuating means is constructed as a lifting magnet (5C) or as a manually actuatable cable pull.

5. Luggage repository according to one of claims 1 to 4,
**characterised in that**
the driving arrangement (10) is constructed as a toothed-belt drive (2), a mechanical clutch (2H), which uncouples the driving motor (21) as necessary, being provided on a driving shaft (2E).

6. Luggage repository according to one of claims 1 to 4,
**characterised in that**
the driving arrangement (10) is constructed as a swivelling drive (4), a mechanical clutch (4G), which can be shifted by means of a shifting dog (2J) and uncouples the drive (4H) as necessary, being provided on a grooved shaft (4E) disposed around the swivel pin.

7. Luggage repository according to claim 5 or 6,
**characterised in that**
the mechanical clutch (2H, 4G) can be shifted by means of a shifting dog (2J) and the shifting dog (20) can be shifted manually via a cable pull (2L) and a hand lever (2M).

8. Luggage repository according to claim 5 or 6,
**characterised in that**
the mechanical clutch (2H, 4G) can be shifted by means of a shifting dog (2J) and the shifting dog (2J) can be shifted electrically, electromagnetically, pneumatically or hydraulically.

9. Luggage repository according to one of claims 1 to 4,
**characterised in that**
the driving arrangement (10) is constructed, by means of a hydraulic or pneumatic working cylinder (6), as a fluid-type lifting drive (6), a working piston (6D) executing the lifting travel and the coupling arrangement being formed by a by-pass line (6C) and a valve (6B), said by-pass line (6C) being opened for the purpose of uncoupling the servo drive.

10. Luggage repository according to one of claims 1 to 4,
**characterised in that**
the driving arrangement (10) is constructed as a spindle-type lifting drive (7) consisting of a screw spindle (7C), a transmission (7B) and a driving motor (7A), a carriage (7D) connected to the luggage bin (1) executing the spindle stroke by means of the screw spindle (7C) and an arrangement being provided for separating (7E) the screw spindle (7C) and carriage (7D).

## Revendications

1. Coffre de rangement avec boîtier abaissable (1), le boîtier (1) étant abaissable d'une position supérieure fermée vers une position de chargement inférieure ouverte, par l'intermédiaire d'au moins un système de guidage (3 ; 4A, 4B, 4C) et une installation d'entraînement (10) ayant été prévu, et
**caractérisé en ce qu'**une installation de couplage destinée à découpler l'installation d'entraînement (10) du système de guidage (3 ; 4A, 4B, 4C) a été prévue.

2. Coffre de rangement selon la revendication 1,
**caractérisé en ce que**
une installation de verrouillage (5) a été prévue pour bloquer le boîtier (1) dans la position supérieure fermée.

3. Coffre de rangement selon la revendication 2,
**caractérisé en ce que**
l'installation de verrouillage (5) se compose d'un cliquet d'encliquetage (5A) qui, une fois la position supérieure fermée atteinte, s'enclenche dans un dispositif d'arrêt (1D) prévu contre le boîtier (1) et qui, en cas de besoin, peut être désenclenché avec un moyen d'activation (5C).

4. Coffre de rangement selon la revendication 3,
**caractérisé en ce que**
le cliquet d'encliquetage (5A) est à ressort et s'engrène dans le dispositif d'arrêt à cause de la force de résilience et **en ce que** le moyen d'activation se présente sous la forme d'une course de levage (5C) ou d'une traction de câble actionnable manuellement.

5. Coffre de rangement selon une des revendications 1 à 4, **caractérisé en ce que**
l'installation d'entraînement (10) se présente sous la forme d'un entraînement à courroie dentée (2), un couplage mécanique (2H) découplant le moteur d'entraînement (2I) en cas de nécessité ayant été prévu sur un arbre d'entraînement (2E).

6. Coffre de rangement selon une des revendications 1 à 4, **caractérisé en ce que**
l'installation d'entraînement (10) se présente sous la forme d'un entraînement pivotant (4), un couplage (4G) mécanique pouvant être commuté à l'aide d'un crabot (2J) et découplant l'entraînement (4H) en cas de nécessité ayant été prévu sur un arbre rainuré (4E) disposé autour de l'axe pivotant.

7. Coffre de rangement selon la revendication 5 ou 6,
**caractérisé en ce que**
le couplage mécanique (2H, 4G) peut être commuté à l'aide d'un crabot (2J) et le crabot (2J) peut être commuté manuellement par l'intermédiaire d'une traction de câble (2L) et d'un levier manuel (2M).

8. Coffre de rangement selon la revendication 5 ou 6,
**caractérisé en ce que**
le couplage mécanique (2H, 4G) peut être commuté à l'aide d'un crabot (2J) et le crabot (2J) peut être commuté par voie électrique, électromagnétique, pneumatique ou hydraulique.

9. Coffre de rangement selon une des revendications 1 à 4, **caractérisé en ce que**
l'installation d'entraînement (10) a été conçu sous la forme d'un entraînement de levage de fluide (6) à l'aide d'un cylindre de travail hydraulique ou pneumatique (6), un piston de travail (6D) exécutant le levage et l'installation de couplage étant constituée d'une conduite de by-pass (6C) et d'une soupape (6B), la conduite de by-pass (6C) étant ouverte pour découpler la servocommande.

10. Coffre de rangement selon une des revendications 1 à 4, **caractérisé en ce que**
l'installation d'entraînement (10) se présente sous la forme d'un entraînement de levage de broche (7) constitué d'une broche filetée (7C), d'un mécanisme (78) et d'un moteur d'entraînement (7A), un traîneau (7D) relié au boîtier (1) procédant au levage de la broche et une installation de séparation (7E) de la broche filetée (7C) et du traîneau (7D) ayant été prévue.
